Europäisches Patentamt

European Patent Office

Office européen des brevets

(11) Veröffentlichungsnummer: **0 165 414 B1**

## (12) EUROPÄISCHE PATENTSCHRIFT

(45) Veröffentlichungstag der Patentschrift: **16.10.91**

(51) Int. Cl.5: **H02G 3/06**

(21) Anmeldenummer: **85105071.6**

(22) Anmeldetag: **26.04.85**

(54) Kabelverschraubung.

(30) Priorität: **22.05.84 DE 3418978**

(43) Veröffentlichungstag der Anmeldung:
**27.12.85 Patentblatt 85/52**

(45) Bekanntmachung des Hinweises auf die
Patenterteilung:
**16.10.91 Patentblatt 91/42**

(84) Benannte Vertragsstaaten:
**AT BE CH DE FR GB IT LI LU NL SE**

(56) Entgegenhaltungen:
**DE-C- 1 286 173      FR-A- 2 328 894**
**FR-A- 2 358 766      US-A- 3 989 340**
**US-A- 4 108 507      US-A- 4 350 840**

(73) Patentinhaber: **Holzmann, Hermann**
**Salzäckerstrasse 59**
**W-7000 Stuttgart 80(DE)**

(72) Erfinder: **Holzmann, Hermann**
**Salzäckerstrasse 59**
**W-7000 Stuttgart 80(DE)**

(74) Vertreter: **Otte, Peter, Dipl.-Ing.**
**Tiroler Strasse 15**
**W-7250 Leonberg(DE)**

## Beschreibung

### Stand der Technik

Die Erfindung betrifft eine Verschraubung aus Kunststoff zur Ein- und Durchführung, Abdichtung und Zugentlastung von Kabeln, Leitungen oder Schläuchen (Kabelverschraubung) nach dem Oberbegriff des Anspruchs 1.

Bekannte Kabelverschraubungen dieser Art (DE-AS 26 31 996; DE-OS 17 50 095) umfassen einen Zwischenstutzen, der beidseitig Außengewinde aufweist, damit er einerseits an einer Montagefläche oder einer Gehäusetrennwand o. dgl. über ein Anschlußgewinde befestigt werden kann und andererseits eine Überwurf- oder Hutmutter auf ihn aufgeschraubt werden kann; ferner sind Klemmzungen vorgesehen, die ringförmig um eine konzentrische, mittlere Durchtrittsöffnung für das Kabel o. dgl. stehen und entweder einstückig koaxial am Zwischenstutzen angeformt oder in einem separaten Klemmzungenkäfig gelagert sind, der dann seinerseits dem Zwischenstutzen zugeordnet ist, - sowie die schon erwähnte Überwurf- oder Hutmutter, die beim Aufschrauben auf den Zwischenstutzen, also bei ihrer Drehung durch einen sich verjüngenden Ringbund eine Art Stützlager bildet, welches die Klemmzungen gleichmäßig in Richtung auf das eingeführte Kabel o. dgl. drückt, so daß dieses schließlich festgeklemmt wird. Innerhalb der Klemmzungen kann üblicherweise noch eine Dichtung angeordnet sein.

Ergänzend hierzu verfügt die Kabeldurchführung entsprechend DE-AS 26 31 996 über eine Verdrehsicherung, die zwischen der Hutmutter einerseits und dem Zwischenstutzen andererseits wirksam ist und sich durch einen ratschenartigen Eingriff zwischen den auf einen kleineren Durchmesser gepreßten und sich dabei fächerartig überlappenden Klemmzungen und einer Schrägverzahnung im Inneren der Hutmutter bemerkbar macht. Bei diesen bekannten Kabelverschraubungen könnte als problematisch angesehen werden, daß schon zu einem relativ frühen Zeitpunkt beim Zudrehen der Hutmutter für die Bedienungsperson eine fühlbare Gegenkraft wirksam wird, die sich dadurch ergibt, daß die Hutmutter mit ihrem Wirkbund die Klemmzungen auf einen immer kleineren Durchmesser pressen muß, wobei diese sich aufgrund einer schrägen Segmentierung fächerartig überlappen. Dies bedeutet nicht notwendigerweise, daß sich durch diese Einwirkung auch schon eine sichere Klemm- oder Abdichtwirkung auf das eingeführte Kabel ergeben hat, was man eigentlich nur dadurch kontrollieren kann, daß man durch Ziehen am Kabel die jeweils erzielte Einspannwirkung überprüft. Hier ist auch die Verdrehsicherung zwischen Hutmutter und Zwischenstutzen keine Hilfe, denn diese Verdrehsicherung wirkt nur zwischen den beiden genannten Elementen, ist also keine Verdrehsicherung für das durchgeführte Kabel selbst, und tritt im übrigen auch schon bei einem sehr frühen Stadium der Hutmutterdrehung auf, so daß die Bedienungsperson sich hierdurch unter Umständen sogar über die jeweils erzielte Klemmwirkung im Irrtum befinden kann, wenn diese nämlich davon ausgeht, daß das Ansprechen der Verdrehsicherung gleichzeitig auch schon eine wirksame Klemmverbindung zwischen Kabel einerseits und der Kabelverschraubung andererseits sicherstellt.

Bei diesen bekannten, ein eingeführtes Kabel mittels eines Klemmzungen-Preßrunds festspannenden Kabelverschraubungen ergibt sich aber noch ein vielschichtigeres Problem, das mit der Alterung der ein eingespanntes Kabel sichernden Kabelverschraubung zusammenhängt. Diese Kabelverschraubungen wirken, wie die bisherigen Ausführungen ergeben haben, kraftschlüssig auf das eingeführte Kabel ein. Hierbei entwickelt das Kabel, üblicherweise bestehend aus kunststoffüberzogenen Kupferdrähten, eingebettet in einem dickeren Kabelmantel, die Tendenz, langfristig dem einwirkenden Druck nachzugeben und durch das kunststoffeigene Fließvermögen sich der Form des Klemmzungen-Preßrunds anzupassen, so daß über die Jahre im schlimmsten Fall das Kabel sogar locker werden kann.

Auf jeden Fall kann sich schon nach kürzerer Einspanndauer der kraftschlüssige Verbund zwischen dem Kabel und den Klemmzungen soweit entspannen, daß das Kabel, beispielsweise bei äußerer Einwirkung, verdreht werden kann. Zwar sichert die Kabelverschraubung dann immer noch die axiale Position des Kabels wegen der radialen Rillenbildung im Kabelmantel - eine Verdrehung könnte aber dazu führen, daß im Inneren des Geräts die elektrischen Anschlüsse freikommen, was besonders große Nachteile bewirkt.

In diesem Zusammenhang ist es bei einer Kabeldurchführung mit Zugentlastung anderer Art bekannt (DE-PS 26 53 163), den Durchtrittsquerschnitt für das Kabel asymmetrisch zu gestalten, so daß sich im Bereich der Klemmwirkung gleichzeitig auch eine unrunde Beziehung zwischen Kabel und Klemmbereich ergibt. Diese bekannte Kabeldurchführung besteht aus einem Tüllenkörper, der über halbschalenförmige Ansätze verfügt mit quer zur Achsrichtung verlaufenden Arretierungswulsten oder Haltenasen, mit denen diese Kabeldurchführung hinter den Kanten einer Durchführungsöffnung eines entsprechenden Geräts unverlierbar verrastet wird. Dabei ragt in die Durchtrittsöffnung der Tülle auf einer Seite eine Klemmbakke, die über ein Scharnierband beweglich mit dem Tüllenkörper verbunden ist. Die Klemmfläche der Klemmbacke ist leicht gewölbt asymmetrisch in Halbschalenform ausgeführt, wobei eine schräg radial in einem Ansatz des Tüllenkörpers geführte separate Klemmschraube bei Betätigung auf die Klemmbacke einwirkt, die bei weiterem Einschrauben der Klemmschraube den Kabeldurchtrittsquerschnitt im Tüllkörper zunehmend asymmetrisch verringert. Durch diese asymmetrische Druckeinwirkung auf das Kabel ergibt sich nicht nur eine gegen die Zugrichtung wirkende Kraft zur Erhöhung der Zugfestigkeit, sondern es wird erkennbar auch eine in etwa formschlüssige Verdrehsicherung erzielt, da sich das Kabel in der asymmetrischen Tüllendurchtrittsöffnung wegen der so gebildeten unrunden Beziehung nicht mehr drehen kann.

Nachteilig bei dieser bekannten Kabeldurchführung, die mit Bezug auf die weiter vorn genannten Klemmzungen-Kabelverschraubungen von einfacher Art ist, könnte der trotz der Haltenasen aufgrund der Einschnappwirkung nur lockere Sitz in der Gehäuseöffnung sein. Dessen Sitzfestigkeit wird zwar durch das Festziehen der Klemmschraube vergrößert, da die einzelnen Haltenasen-Trägeransätze voneinander weggedrückt werden; durch das erwähnte Fließverhalten des Kabelmantels ist aber nicht auszuschließen, daß sich hierdurch nicht nur eine Lockerung des Kabelsitzes, sondern auch gleich noch der ganzen Kabeldurchführung im Gehäuse ergeben. Außerdem wird das Kabel nur auf gegenüberliegenden Seiten eingespannt, so daß von einer insgesamt geringeren Klemmwirkung mit Bezug auf eine Klemmzungen-Kabelverschraubung wohl ausgegangen werden muß. Da Hutmutter und ein Klemmzungen-Ringverbund bei dieser bekannten Kabeldurchführung völlig fehlen, bestehen keine Beziehungen zu vorliegender Erfindung.

Von ähnlicher Art ist schließlich eine Kabelverschraubung (US-A-4 350 840), bei der zwei verschiedene Einwirkungen auf das durchgeführte Kabel zu beobachten sind, nämlich eine erste stopfbuchsenartige Einschnürwirkung, hervorgerufen durch eine elastische Dichtung, sowie eine weitere radiale, einen elliptischen Spannquerschnitt herbeiführende Einspannwirkung, die beide primär verursacht werden durch das Aufschrauben einer Hutmutter auf das Gewinde eines aus einem metallischen Preßstück bestehenden Zwischenstutzens.

Der Aufbau bei dieser bekannten Kabelverschraubung ist so getroffen, daß unmittelbar innen anliegend in der Bohrung des Zwischenstutzens zunächst eine elastische Ringdichtung sitzt, auf der sich radial weiter nach innen stehend zwei einander gegenüberliegende starre Greifelemente abstützen. Die Hutmutter tritt beim Anziehen mit den Greifelementen in Wirkverbindung und versucht, dieses zunächst axial wegzudrücken, wodurch auch der freie Innenraum in diesem Bereich verringert wird. Diese axiale Belastung wirkt sich primär auf die elastische Dichtung aus, die dabei stopfbuchsenartig mit einer radialen Aufweitung reagiert und daher nach innen gegen das Kabel drückt, da sie nach außen durch die Innenwandung des Zwischenstutzens, in dessen Bohrung sie sitzt, an einem Ausweichen gehindert ist.

Bei weiterem Anziehen der Hutmutter verschwenken dann die beiden Greifelemente nach innen, wobei sie sich hauptsächlich an ihrem oberen, durch die Bohrung der Hutmutter sichtbaren Randbereichen annähern und hierdurch ein durchgeführtes Kabel sowohl breitquetschen als auch in eine entsprechende elliptische Form bringen, etwa in Gegenwirkung zu der elastischen Dichtung, die um etwa 90° versetzt ihre maximale Druckwirkung auf das Kabel axial weiter innen ausübt. Ein Zusammenhang zwischen dieser bekannten Kabelverschraubung und dem Gegenstand der Erfindung ist weder nach Struktur noch Funktion erkennbar.

Der Erfindung liegt demgegenüber die Aufgabe zugrunde, die bekannte Kabelverschraubung, bei der sämtliche Klemmzungen in einem Ringverbund gleichmäßig ein eingeführtes Kabel umgebend angeordnet sind, so auszubilden, daß bei gleicher, bisher schon erzielter Dichtwirkung nicht nur eine kraftschlüssige, sondern auch eine formschlüssige Verdrehsicherung zwischen der Kabelverschraubung und dem durchgeführten Kabel erreicht wird.

Vorteile der Erfindung

Die Erfindung löst diese Aufgabe mit den kennzeichnenden Merkmalen des Anspruchs 1 und hat den Vorteil, daß durch das Heraustreten mindestens einer Klemmzunge aus dem Ringverbund der Klemmzungen eine Verformwirkung auf das Kabel, den Schlauch oder ein ähnliches, eingeführtes längliches Teil ausgeübt wird, so daß sich insgesamt eine komplementär unrunde Form zwischen Kabel, Dichtung und dem Wirkbund der Klemmzungen ergibt, andererseits aber die dichte Klemmwirkung über den gesamten Dichtungsumfang zwischen Kabel, Dichtung und von den Klemmzungen gebildetem Ringbund aufrecht erhalten bleibt.

Dabei ist die mindestens eine, jedoch vorzugsweise mehrere Klemmzungen in ihrer Zuordnung zu den anderen Klemmzungen so ausgebildet, beispielsweise durch entsprechende Segmentierung oder Führung der Trennschlitze zwischen den einzelnen Klemmzungen, daß beim Anziehen der Überwurf- oder Hutmutter diese einzelnen Klemmzungen selektiv nach innen in Richtung auf das eingespannte Kabel und die zwischen ihnen und dem Kabel liegende Dichtung gepreßt werden, so daß, sobald die ersten klemmenden Wirkungseinflüsse auf das Kabel bemerkbar werden, dieses auch gleich in eine dann bleibende, unrunde Form gedrückt, verformt oder geknetet wird. Diese unrunde Form ist komplementär, d. h. das Kabel ist über die Zwischendichtung an seiner Außenfläche unrund und die Kabeldurchführung ist aufgrund der spezifischen, nach der Drehung der Hutmutter erzielten Stellung der selektiven Klemmzungen ebenfalls komplementär unrund, so daß ein Verdrehen unmöglich ist.

In diesem Sinne umfaßt die Erfindung entsprechende Möglichkeiten, durch spezielle Ausbildung der Segmentierung und/oder Formung der einzelnen Klemmzungen diese Klemmzungen beim Drehen der Hutmutter selektiv nach innen und aus dem Normalumfang der anderen Klemmzungen heraustreten zu lassen.

Die Erfindung hat den Vorteil, daß durch das Heraustreten mindestens einer Klemmzunge im Rund des Klemmzungen-Wirkbundes eine Verformwirkung auf das Kabel, die Leitung oder den Schlauch ausgeübt wird, so daß sich insgesamt eine komplementär unrunde oder eckige Form im Bereich von Kabel, Dichtung und Klemmzungenwirkbund ergibt, wobei gleichzeitig die dichte Klemmwirkung über den gesamten Dichtungsumfang zwischen Kabel, Dichtung und Klemmzungen-Wirkbund aufrechterhalten wird.

Ein besonderer Vorteil bei vorliegender Erfindung ergibt sich ferner dadurch, daß sozusagen automatisch durch Herstellen der kraftschlüssig wirkenden Einspannung bei der Hutmutterbetätigung auch die formschlüssige Verdrehsicherung realisiert wird, aufgrund der speziellen Form bzw. Ausbildung einzelner Klemmzungen.

So nutzt ein Ausführungsbeispiel der Erfindung eine größere radiale Dicke einer oder mehrerer im Klemmzungen-Ringverbund angeordneter Klemmzungen aus, die daher nach erzielter Wirkverbindung aufgrund der Druckwirkung des Hutmutterbundes radial stärker nach innen stehen und mit dem Kabel eine unrunde oder eckige Konfiguration bilden.

Ein weiteres Ausführungsbeispiel nutzt die Formgebung spezieller Klemmzungen in Verbindung mit beidseitig unmittelbar angrenzenden Klemmzungen aus, und zwar in einer Weise, daß sich auf eine oder mehrere Klemmzungen primär aufgrund des einwirkenden Hutmutterdrucks und unmittelbar durch seitliche Druckwirkung der angrenzenden Klemmzungen eine Keilwirkung ergibt, die diese der Keilwirkung unterworfenen Klemmzungen verstärkt nach innen drückt.

In diesem Zusammenhang ergibt sich ferner noch der Vorteil, daß aufgrund der Anordnung von beidseitig eine gleichsinnig wirkende schiefe Ebene bildenden Konfigurationen in der Segmentierung der angrenzend aneinanderstehenden Klemmzungen die mindestens eine Klemmzunge sehr leicht aus dem äußeren Ringverbund nach innen herausgedrückt werden kann, so daß sich ein problemloses Anziehen der Überwurf- oder Hutmutter bis zu dem Moment ergibt, wo tatsächlich eine ausgeprägte Klemmwirkung dann auch auf das gesamte Kabel ausgeübt wird. Dieses leichte Anziehen ist darauf zurückzuführen, daß die mindestens eine Klemmzunge aufgrund dieser beidseitigen Schiefe-Ebene-Konfigurationen nach Art eines Keils ihren Platz im äußeren Ringbund der Klemmzungen leicht freimacht, so daß auch der Widerstand gegen ein weiteres Eindrehen, den der Klemmzungen-Ringbund üblicherweise gegen die Hutmutter ausübt, weil hier normalerweise relativ erhebliche Verformungen und Übereinanderschiebungen erforderlich sind, geringer ist. Eine echte rückwirkende Kraft fühlt die Bedienungsperson erst in dem Moment, an welchem sich eine eindeutige Klemmwirkung ergibt und daher das Kabel dann auch tatsächlich sauber abgedichtet und wirkungsvoll verdrehungssicher in der Kabelverschraubung gehalten und angeordnet ist.

Dabei versteht es sich, daß die aus dem äußeren peripheren Ring der Klemmzungen nach innen beim anfänglichen Drehen schon heraustretenden Klemmzungen nicht eine Eingrabwirkung in Richtung auf das durchgeführte Kabel ausüben können, denn zwar ist die durch das frühe Einkippen bewirkte Höhenänderung gegenüber der Höhe der im äußeren Ringbund verbleibenden Klemmzungen nur gering, wenn auch wirksam, worauf weiter unten noch eingegangen wird, andererseits aber übergreifen diese früher nach innen gedrückten Klemmzungen nicht den eingelegten Dichtungskörper, sondern üben über den Dichtungskörper ihre verformende Kraft auf Kabel und Dichtungskörper aus.

Vorteilhaft ist auch die sich durch die jetzt in unterschiedlicher Höhe angreifenden Klemmzungen - einige sind nach innen nach Drehung der Hutmutter vorgetreten, die anderen sind im äußeren Wirkungsbund verblieben - erzielte Kraftverteilung der Klemm- und Verform- sowie Haltewirkung auch in axialer Richtung, so daß die spezifische Andruckwirkung pro Flächenelement trotz vergrößerter Haltewirkung und sicherer Verdrehsicherung und Abdichtung geringer ist.

Dabei wird bei einer entsprechend symmetrischen Verteilung der selektiven Klemmzungen über den Vollkreis des Klemmzungenringbundes ein weiterer Vorteil offenbar, der darin besteht, daß schon relativ früh beim Anziehen durch das schnelle Hervortreten der selektiven Klemmzungen auch auf dünnere durchgeführte Kabel eine hinreichende Klemmwirkung noch ausgeübt wird, so daß eine größere Variationsbreite in der Klemmung von Kabel unterschiedlicher Durchmesser durch lediglich eine Bauform gewährleistet ist, und zwar bei gleichbleibend aufrechterhaltender Dichtungswirkung, da sämtliche Klemmzungen vom gleichen Ringbunddurchmesser anfänglich ausgehen und daher spätestens an dieser Stelle die sich durch das selektive Hervortreten einzelner Klemmzungen ergebenden Schlitze zwischen den Klemmzungen insgesamt wieder ausgleichen, diese also verschwinden. Zur angestrebten Dichtwirkung trägt natürlich auch und insbesondere die zwischengelegte ringförmige Dichtung mit hinreichender axialer Erstreckung bei.

Durch die in den Unteransprüchen aufgeführten Maßnahmen sind vorteilhafte Weiterbildungen und Verbesserungen der im Hauptanspruch angegebenen Verschraubung möglich. Besonders vorteilhaft ist die Anordnung von nach innen tretenden einzelnen Klemmzungen in symmetrischer Verteilung über den Vollkreis des Klemmzungenringbundes. Legt man hier besonderes Gewicht auf die Erzielung einer formschlüssigen Verdrehsicherung, dann eignet sich die Anordnung jeweils einer selektiven Klemmzunge im Abstand von 120° über den Umfang gesehen, die dann beidseitig in der gleichen Wirkungsrichtung arbeitende, schräge Ebenen bildende Segmentierungen aufweist. Hierdurch ergibt sich eine einem Dreieck vergleichbare Druck- und Verformungswirkung auf das durchgeführte Kabel.

Zeichnung

Ein Ausführungsbeispiel der Erfindung ist in der Zeichnung dargestellt und wird in der nachfolgenden Beschreibung näher erläutert. Es zeigen:
die Figuren 1a und 1b ein Ausführungsbeispiel eines Zwischenstutzens der erfindungsgemäßen Kabeldurchführung in Seitenansicht, hälftig im Schnitt, und in Draufsicht;
die Figuren 2a und 2b in Draufsicht und in Seitenansicht, hälftig im Schnitt, die Überwurf- oder Hutmutter;
Fig. 3 eine erfindungsgemäße Kabelverschraubung mit eingespanntem Kabel und an einer geeigneten Montagefläche befestigt in einer Seitenansicht und
Fig. 4 die Kabelverschraubung der Fig. 3 in Draufsicht, wobei das Kabel von oben so weggenommen ist, daß man die durch die erfindungsgemäße Segmentierung erzielte Klemm- und Verdrehsicherungswirkung, bewirkt durch ein selektives Klemmzungenhervortreten, erkennen kann.

Beschreibung der Ausführungsbeispiele

Der Grundgedanke vorliegender Erfindung besteht darin, über den peripheren Wirkbund der koaxial außen am Zwischenstutzen angeordneten Klemmzungen mindestens eine, vorzugsweise mehrere Klemmzungen selbst und in ihrer Zuordnung zu den anderen Klemmzungen so auszubilden, beispielsweise durch entsprechende Segmentierung oder Führung der Trennschlitze zwischen den einzelnen Klemmzungen, daß beim Zudrehen der Überwurf- oder Hutmutter diese einzelnen Klemmzungen selektiv nach innen in Richtung auf das eingespannte Kabel und die zwischen ihnen und dem Kabel liegende Dichtung gepreßt werden, so daß , sobald die ersten klemmenden Wirkungseinflüsse auf das Kabel bemerkbar werden, dieses auch gleich in eine dann bleibende, unrunde Form gedrückt, verformt oder geknetet wird. Diese unrunde Form ist komplementär, d.h. das Kabel ist über die Zwischendichtung an seiner Außenfläche unrund und die Kabeldurchführung ist aufgrund der spezifischen, nach der Drehung der Hutmutter erzielten Stellung der selektiven Klemmzungen ebenfalls komplementär unrund, so daß ein Verdrehen unmöglich ist.

In diesem Sinne umfaßt die Erfindung alle denkbaren Möglichkeiten, die durch die spezielle Ausbildung der Segmentierung und/oder der Formung der einzelnen Klemmzungen möglich ist, um diese Klemmzungen beim Drehen der Hutmutter selektiv nach innen und aus dem Normalumfang der anderen Klemmzungen heraustreten zu lassen.

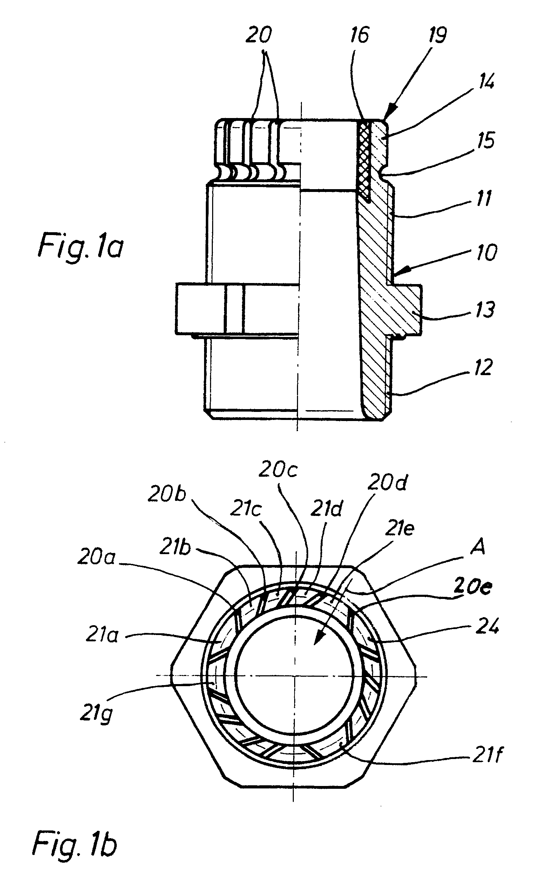

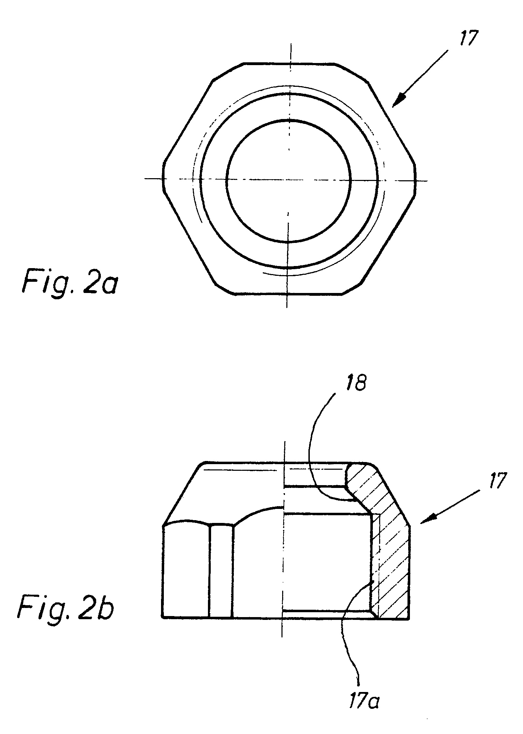

In den Figuren 1a und 1b ist der mit den Klemmzungen hier vorzugsweise vollkommen einstückig ausgebildete Zwischenstutzen mit 10, sein Aufnahmegewinde für die Hutmutter mit 11 und sein Außengewinde zur Befestigung an einer geeigneten Montagewand, Gehäuse-Trennwand, Durchführung o. dgl. mit 12 bezeichnet. Der Zwischenstutzen verfügt üblicherweise über einen äußeren, einen Sechskant bildenden Montagebund 13, mit welchem er dann auch auf der Montagefläche aufsitzen kann - nach oben in der Zeichenebene geht der Zwischenstutzen 10 in die Klemmsegmente, Zähne oder Klemmzungen 14 über, wie sie im folgenden ausschließlich noch genannt werden sollen. Diese Klemmzungen sind hier einstückig am Zwischenstutzen 10 angeformt und weisen, beispielsweise zur Erzielung einer leichteren Beweglichkeit bei selbstverständlich verbleibender hinreichender Festigkeit eine äußere Ringnut oder Einschneidung 15 auf. Nach innen ist in den Bereich und über die Höhe der Klemmzungen ein zylindrischer Dichtungskörper 16 noch eingesetzt, der durch eine gewisse Klemmwirkung auch vor der Montage und dann, wenn die Hutmutter beim Versand mit aufgeschraubt ist, an seinem Sitz praktisch unverlierbar gehalten ist. Die ganze Kabelverschraubung besteht überhaupt nur aus dem Zwischenstutzen 10, dem Dichtungskörper 16 und der in den Figuren 2a und 2b gezeigten Hutmutter 17, wobei die Hutmutter insofern konventionell, also wie auch bisher üblich, ausgebildet sein kann, mit einem Innengewinde bei 17a in Fig. 2b und einem sich oben nach innen verjüngenden Randbereich im Übergang auf einen kleineren Öffnungsdurchmesser und unter Bildung einer inneren, mit Bezug auf den oberen Rand- oder Kantenbereich der Klemmzungen 14 am Zwischenstutzen 10 schräg geneigten Ringfläche 18. Durch das Zusammenwirken dieser Ringfläche 18 mit den oberen Endbereichen der Klemmzungen 14, genauer gesagt mit dem mit 19 bezeichneten Übergangsbereich, ergibt sich durch die Wirkung der so gebildeten schiefen Ebene des Stützlagers 18 die ebenfalls für sich gesehen bekannte, die Klemmzungen auf immer kleinere Durchmesser nach innen drängende Druckwirkung durch die Hutmutter 17 bei ihrem zunehmenden Aufschrauben auf das Anschlußgewinde. Dabei ist im übrigen die Länge des Aufnahmegewindes 11 am Zwischenstutzen 10 und die Länge des Hutmutter-Innengewindes 17a so ausgebildet, daß, bevor die Druckwirkung auf die Klemmzungen durch die Druckringfläche 18 beginnt, schon eine größere Anzahl von Umdrehungen der Hutmutter auf den Zwischenstutzen durchgeführt sind, so daß eine größere Anzahl von Gewindegängen für einen sicheren, nicht mehr überspringbaren Halt der Hutmutter am Zwischenstutzen dann sorgen, wenn diese in die nicht unerhebliche Kraft-Wechselwirkung mit den Klemmzungen zum Kabeleinspannen gelangt.

Wie in den Figuren 1a und 1b dargestellt, stehen die einzelnen Klemmzungen relativ eng und angrenzend zueinander und sind durch Schlitze 20 getrennt, die bei dem dargestellten Ausführungsbeispiel Schrägschlitze wie sie im übrigen für sich gesehen an einem Dichtungskörper einer abdichtenden Wanddurchführung aus der DE-PS 21 32 951 bekannt sind.

Bei der Segmentierung, also Schlitzbildung nach vorliegender Erfindung ist allerdings von besonderer Bedeutung, daß sich nach einer vorgegebenen Anzahl von einzelnen Schlitzen 20a, 20b, 20c, 20d, die alle in der gleichen Richtung, wie in Fig. 1b, hierbei einer Sekante über den von den Klemmzungen gebildeten Wirkbundumfang folgend, geneigt sind, durch eine Konträrschlitzung 20e, also eine in der Gegenrichtung geneigte Segmentierung mindestens eine besondere, sogenannte selektive Klemmzunge 21e ergibt. Dies führt einerseits für die durch die Segmentierungen oder Schlitze 20a, 20b, 20c, 20d getrennten Klemmzungen 21a, 21b, 21c, 21d zu der bekannten, fächerartig sich übereinanderschiebenden Überlappungswirkung, während auf die in Kreisrichtung der Fig. 1b nun folgende Klemmzunge 21e beidseitig durch die Segmentierung eine Krafteinwirkung beim Drehen der Hutschraube zur Auswirkung kommt, die sich anschaulich sofort dem Betrachter als eine nach innen gerichtete, also in Richtung des Pfeils A verlaufende Kraftwirkung bemerkbar macht. Folgerichtig wird diese eine Klemmzunge 21e - und je nach Wunsch über den Umfang vorzugsweise symmetrisch verteilt weitere Klemmzungen -, beim Zuschrauben der Hutmutter einwärts gedrückt werden, während die restlichen Klemmzungen in Anlage an die Druckringfläche 18 der Hutmutter verbleiben und erst allmählich auf immer kleineren Durchmesser verengt werden. Erkennbar sind die selektiv einer verschiebenden Druckwirkung unterworfenen Klemmzungen 21e und ferner 21f, 21g bei drei, jeweils um 120° über den Umfang der Klemmzungen versetzten weiteren Klemmzungen durch ihre Keilform demnach innen gerichteten Druck - von beiden Seiten - unterworfen, so daß sie sich aus dem peripheren Ring der verbleibenden Klemmzungen lösen, ihre Plätze dort freimachen, so daß sich auch der verbleibende Klemmzungenring ohne größeren Widerstand verengen läßt, während, auch hier wieder ohne größeren widerstand, die selektiv wirksamen Klemmzungen 21e, 21f, 21g von den beiden angrenzenden Klemmzungen progressiv nach innen gedrückt werden.

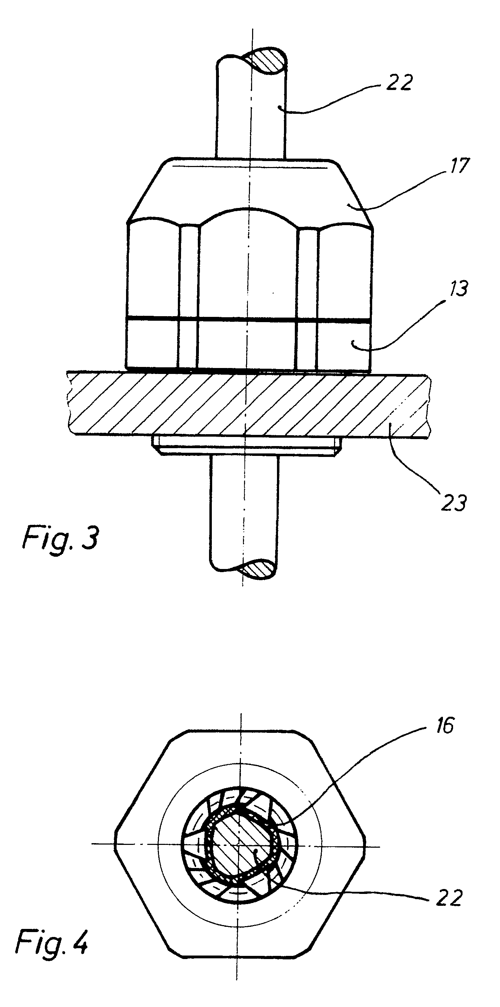

Es ergibt sich dann, wie Untersuchungen festgestellt haben, nach vollzogener Drehung der Hutmutter das in Fig. 4 dargestellte, zu erwartende Bild der kraft- und formschlüssigen Druck- und Haltewirkung auf das durchgeführte Kabel 22, wobei man deutlich eine ausgeprägte, durch die Verformungswirkung der selektiven Klemmzungen 21e, 21f, 21g hervorgerufene Dreiecksform in der Außenfläche des Kabels 22 und über die Zwischendichtung 16 auch der Innenfläche des Klemmzungenrings insgesamt erkennen kann. Diese Dreiecksform ist unrund und bietet eine unbedingte Verdrehsicherung für das Kabel, welches daher außerstande ist, auch bei starker einwirkender äußerer Verdrehung seine Winkelposition in der Kabeldurchführung zu ändern.

Die Montage der erfindungsgemäßen Kabeldurchführung erfolgt dann so wie in Fig. 3 gezeigt - es wird also zunächst der Zwischenstutzen 13 auf die Montagefläche 23 mit seinem unteren Anschlußgewinde aufgeschraubt, gegebenenfalls durch eine Gegenmutter noch gehalten, was nicht dargestellt ist, das Kabel 22 oder ein sonstiges geeignetes Längselement wird durchgeführt und die Hutmutter 17 wird aufgeschraubt und so weit angezogen, bis sich eine entsprechende Schwergängigkeit ergibt. Sobald diese eintritt, ist sichergestellt, daß über den Dichtungskörper eine besonders kabelschonende Zugentlastung sowie der Verdrehungsschutz des eingeführten Kabels erzielt ist, bei einwandfreier peripherer Abdichtung. Die zwischen dem Zwischenstutzen einerseits und dem durchgeführten Kabel andererseits erzielte Verdrehsicherung ist dabei nicht oder höchstens zum geringsten Teil auf die Klemmwirkung, also auf die Kraftschlüssigkeit zurückzuführen; sie ist hauptsächlich sichergestellt durch die Unrundheit der beteiligten Komponenten, also durch die Formschlüssigkeit zwischen den Komponenten, die nach Art einer Verzahnung miteinander in Wirkverbindung stehen.

Man erkennt im übrigen aus der Darstellung der Fig. 1b, daß sich durch die zur Erzielung der Keilwirkung bei den selektiv nach innen tretenden Klemmzungen angrenzend zu diesen wieder Klemmzungen ergeben, von denen lediglich auf die Klemmzunge 24 in Fig. 1b verwiesen wird, die ebenfalls beidseitig über gegeneinander gerichtete Schrägflächen nach Art eines Keils verfügt. Diese Klemmzunge(n) sind aber durch die einwirkende Schrägfläche 18 der Hutmutter gehalten und bleiben so im Verbund der anderen Klemmzungen 20a, 20b ... - lediglich für die selektiven Klemmzungen 21e, 21f, 21g ergibt sich ein nach innen gerichteter Freiheitsgrad.

Auf die Leichtgängigkeit der Verschraubung sei nochmals hingewiesen - durch die Keilwirkung der selektiven Klemmzungen und deren Heraustreten aus dem verbleibenden Ring der Klemmzungen ist die Verengung des gesamten Klemmzungen-Wirkbundes vergleichsweise widerstandsfrei durchzuführen und eine echte, das weitere Eindrehen der Hutmutter dann zunehmend behindernde Gegenkraft ergibt sich erst dann, wenn die effektive Klemm- und Arretierwirkung auf das durchgeführte Kabel sichergestellt ist.

Weiter vorn ist schon darauf hingewiesen worden, daß die Erfindung in ihrem Grundgedanken gesehen darin besteht, daß selektive Klemmzungen nach innen unter Verformung des Kabels eine Unrundheit bewirken, was auch noch durch weitere Lösungsmöglichkeiten erzielt werden kann. So kann ein weiteres Ausführungsbeispiel vorliegender Erfindung dadurch realisiert werden, daß man von Anfang an bestimmte Klemmzungen in ihrer radialen Erstreckung dicker macht als andere, so daß diese eher mit der einwirkenden Druckschrägfläche 18 der Hutmutter in Wirkverbindung treten. Dementsprechend früher dringen dann diese wiederum als selektiv zu bezeichnenden Klemmzungen aus dem Ring der anderen Klemmzungen nach innen vor und führen schon eine unrunde Form herbei, wenn die anderen Klemmzungen sich durch ihre Übereinanderlagerung bei fächerförmiger Ausbildung der Segmentierung erst allmählich auf kleinere Durchmesser verengen. Auch hierdurch läßt sich im Sinne vorliegender Erfindung eine Unrundheit der Gesamtkonfiguration aus Klemmzungen, Wirkbund und eingeführtem Kabel, wie ohne weiteres ersichtlich, erzielen. Herstellungstechnische Gegebenheiten mögen jedoch dem ersten Ausführungsbeispiel den Vorzug geben, welches auch eine problemlose Vormontage ermöglicht. Bei einer radialen Verdickung selektiver Klemmzungen kommt es im übrigen auch nicht auf die Art der Segmentierung speziell an - man könnte die Klemmzungen auch mit größeren Abständen stellen, wobei die jeweils verdickten zunächst nach innen gebogen werden, bis dann auch die restlichen Klemmzungen von der schrägen Druckfläche 18 der Hutmutter erfaßt und verengt werden. In diesem Fall können die Schlitze zwischen den Zungen schräg oder auch radial geradlinig verlaufen.

**Patentansprüche**

1. Verschraubung aus Kunststoff zur Ein- und Durchführung, Abdichtung und Zugentlastung von Kabeln, Leitungen oder Schläuchen (Kabelverschraubung), bestehend aus Zwischenstutzen (10) mit Dichtungskörper (16) und Hutmutter (17), wobei am hohlzylindrischen Zwischenstutzen (10) Klemmzungen (14) koaxial angeordnet sind, welche bei Drehung der Hutmutter den innenliegenden Dichtungskörper (16) gegen das eingeführte Kabel (22) o. dgl. pressen, dadurch gekennzeichnet, daß mindestens eine der den Ringverbund der Klemmzungen (14) anfänglich bildenden Klemmzungen so ausgebildet ist, daß bei auf die Klemmzungen (14) einwirkendem Hutmutterdruck infolge der Wirkbundeinwirkung auf die Klemmzungen mindestens eine der Klemmzungen (21e, 21f, 21g) selektiv eine stärkere Annäherung an das eingeführte Kabel (22) erfährt, verglichen mit den im Ringverbund verbleibenden Klemmzungen derart, daß sich zwischen dem Kabel (22) einerseits und den Klemmzungen (14) andererseits eine unrunde Konfiguration ergibt.

2. Verschraubung nach Anspruch 1 mit einer Schrägsegmentierung angrenzender Klemmzungen, dadurch gekennzeichnet, daß die Schrägsegmentierung von angrenzend aneinanderstehenden Klemmzungen (14) so getroffen ist, daß für die mindestens eine Klemmzunge (21e, 21f, 21g) eine beidseitig entgegengesetzt verlaufende Schräge-Ebene-Konfiguration gebildet ist, die bei einwirkendem Hutmutterdruck diese mindestens eine Klemmzunge (21e, 21f, 21g) aus dem Ringverbund der restlichen Klemmzungen (21a, 21b, 21c, 21d) heraus und in Richtung auf das eingeführte Kabel treibt.

3. Verschraubung nach Anspruch 1 mit radial oder schräg verlaufenden, die Klemmzungen trennenden Schlitzen, dadurch gekennzeichnet, daß mindestens eine der Klemmzungen (14) eine größere radiale Dicke als die anderen Klemmzungen im Ringverbund aufweist, derart, daß sich bei beginnendem,einwirkendem Hutmutterdruck zunächst eine Druckwirkung lediglich auf die radial dickere(n) Klemmzunge-(n) ergibt, so daß diese nach erzielter Wirkverbindung des gesamten Ringverbunds aller Klemmzungen (14) mit dem Hutmutterbund radial stärker nach innen stehen und die unrunde Konfiguration bilden.

4. Verschraubung nach Anspruch 1 mit radial oder schräg verlaufenden, die Klemmzungen trennenden Schlitzen, dadurch gekennzeichnet, daß in unterschiedlicher axialer Höhe bei gedrehter Hutmutter (17) zwei Einwirkungsbereiche, zum einen durch die selektiv nach innen gedrückten Klemmzungen (21e, 21f, 21g) und zum anderen durch die im Ringverbund verbleibenden Klemmzungen (21a, 21b, 21c, 21d), auf das durchgeführte Kabel gebildet sind, derart, daß die von den Klemmzungen (14) insgesamt ausgeübten Druckkräfte zur Zugentlastung, Abdichtung und Verdrehsicherheit des Kabels auf einen axialen Flächenbereich bei verringerter spezifischer Preßkraft verteilt sind.

5. Verschraubung nach einem der Ansprüche 1-4, dadurch gekennzeichnet, daß alle Klemmzungen einstückig am hohlzylindrischen Zwischenstutzen unter Bildung des Ringverbundes koaxial angeformt sind.

6. Verschraubung nach Anspruch 2, dadurch gekennzeichnet, daß die Schrägsegmentierung bei angrenzenden Klemmzungen (14) so getroffen ist, daß nach einer vorgegebenen Anzahl von Schlitzen in einer gegebenen Richtung ein nachfolgender Trennschlitz (20e) in der entgegengesetzten Richtung um den gleichen Winkel schräg geneigt ist, derart, daß sich für jede solche, beidseitig entgegengesetzt geneigte Trennschlitze (20d, 20e) aufweisende, selektive Klemmzunge (21e, 21f, 21g) eine Keilform ergibt, die diese aus dem verbleibenden Ringverbund der Klemmzungen (14) bei einwirkendem Hutmutterdruck nach innen heraustreibt.

7. Verschraubung nach Anspruch 6, dadurch gekennzeichnet, daß die selektiv nach innen tretenden Klemmzungen über den Vollkreis des Ringverbunds der Klemmzungen (14) in symmetrisch gleichmäßiger Verteilung angeordnet sind.

8. Verschraubung nach Anspruch 6, dadurch gekennzeichnet, daß lediglich drei, gleichmäßig über den Umfang des Ringverbundes der Klemmzungen (14) verteilte, dabei um 120 Winkelgrade zueinander getrennte selektive Klemmzungen (21e, 21f, 21g) durch die Klemmzungensegmentierung gebildet sind.

9. Verschraubung nach einem der Ansprüche 1-8, dadurch gekennzeichnet, daß sämtliche Klemmzungen (14) über eine zwischengelegte, ringförmige Dichtung mit axialer Erstreckung auf das eingeführte Kabel einwirken.

10. Verschraubung nach einem der Ansprüche 1-7, dadurch gekennzeichnet, daß die selektiv einwirkenden Klemmzungen (21e, 21f, 21g) mit ihrer mit Bezug auf das Kabel wirksamen inneren Druckfläche höher oder tiefer als der verbleibende Ringverbund der Klemmzungen gestellt sind derart, daß eine zusätzliche axiale Entzerrung der Druckbereiche erreicht wird.

11. Verschraubung nach Anspruch 10, dadurch gekennzeichnet, daß die höhergestellten selektiven Klemmzungen die Dichtung (16) übergreifen und direkt auf das Kabel (22) einwirken.

## Claims

1. Screw fitting of plastics for the insertion and through guidance, sealing and strain relief of cables, lines or hoses (cables screw fitting), comprising intermediate connection pieces (10) with sealing body (16) and cap nut (17), clamping tongues (14) being arranged coaxially on the hollow-cylindrical intermediate connection piece (10) and pressing the sealing body (16) on the inside against the inserted cable (22) or the like when the cap nut is rotated, characterized in that at least one of the clamping tongues initially forming the annular arrangement of the clamping tongues (14) is constructed such that, in the case of pressure from the cap nut acting on the clamping tongues (14), as a result of the active connection effect on the clamping tongues, at least one of the clamping tongues (21e, 21f, 21g) selectively undergoes a greater degree of approaching the inserted cable (22), compared with the clamping tongues remaining in the annular arrangement, such that there results between the cable (22) on the one hand and the clamping tongues (14) on the other hand a non-circular configuration.

2. Screw fitting according to Claim 1, having an oblique segmentation of adjacent clamping tongues, characterized in that the oblique segmentation of clamping tongues (14) positioned adjacent to one another is such that, for the at least one clamping tongue (21e, 21f, 21g), there is formed an oblique plane configuration which runs in opposite directions on both sides and which, in the case of pressure acting from the cap nut, drives this at least one clamping tongue (21e, 21f, 21g) out of the annular arrangement of the remaining clamping tongues (21a, 21b, 21c, 21d) and in the direction of the inserted cable.

3. Screw fitting according to Claim 1, having slots which run radially or obliquely and which separate the clamping tongues, characterized in that at least one of the clamping tongues (14) has a greater radial thickness than the other clamping tongues in the annular arrangement, such that when the pressure from the cap nut begins to act, there results first a pressure action solely on the radially thicker clamping tongue(s), so that the latter, after the active connection of the entire annular arrangement of all clamping tongues (14) with the cap nut has been achieved, are radially further inward and form the non-circular configuration.

4. Screw fitting according to Claim 1, having slots which run radially or obliquely and separate the clamping tongues, characterized in that there are formed at different axial heights when the cap nut (17) is rotated two regions of action on the inserted cable, on the one hand by the selectively inwardly pressed clamping tongues (21e, 21f, 21g) and on the other hand by the clamping tongues remaining in the annular arrangement (21a, 21b, 21c, 21d), such that the pressure forces exerted as a whole by the clamping tongues (14) are distributed for the purpose of strain relief, sealing and security against rotation of the cable over an axial surface region with a reduced specific pressing force.

5. Screw fitting according to one of Claims 1 to 4, characterized in that all clamping tongues are integrally formed coaxially in one piece with the hollow-cylindrical intermediate connection piece to form the annular arrangement.

6. Screw fitting according to Claim 2, characterized in that the oblique segmentation in the case of adjacent clamping tongues (14) is such that, after a predetermined number of slots in a given direction, a subsequent separating slot (20e) is obliquely inclined in the opposite direction by the same angle such that there results for each such selective clamping tongue (21e, 21f, 21g) having a separating slot (20d, 20e) inclined in opposite directions on both sides a wedge shape which drives this clamping tongue inwards out of the remaining annular arrangement of clamping tongues (14) in the case of pressure acting from the cap nut.

7. Screw fitting according to Claim 6, characterized in that the selectively inwardly moving clamping tongues are arranged in a symmetrically uniform distribution over the full circle of the annular arrangement of clamping tongues (14).

8. Screw fitting according to Claim 6, characterized in that only three selective clamping tongues (21e, 21f, 21g), which are distributed uniformly over the periphery of the annular arrangement of clamping tongues (14) and in this are separated from one another by angles of 120°, are formed by the clamping tongue segmentation.

9. Screw fitting according to one of Claims 1 to 8, characterized in that all the clamping tongues (14) act by way of an intermediate annular sealing of axial extent on the inserted cable.

10. Screw fitting according to one of Claims 1 to 7, characterized in that the selectively acting clamping tongues (21e, 21f, 21g) are placed with their inner pressure surface acting with reference to the cable higher or lower than the remaining annular arrangement of clamping tongues such that an additional axial rectification of the pressure regions is achieved.

11. Screw fitting according to Claim 10, characterized in that the selective clamping tongues which are placed higher reach over the sealing (16) and act directly on the cable (22).

**Revendications**

1. Accessoire de câble, fileté, en matière synthétique, pour la mise en place et le passage, l'étanchéité et la décharge en traction de câbles, lignes et tuyaux (raccords de câbles) comprenant un raccord intermédiaire (10) avec un organe d'étanchéité (16) et un écrou chapeau (17), le raccord intermédiaire (10) cylindrique creux comportant coaxialement des languettes de serrage (14) qui lorsqu'on visse l'écrou chapeau pressent l'organe d'étanchéité (16) situé à l'intérieur contre le câble (22) ou analogue, mis en place, accessoire caractérisé en ce qu'au moins l'une des languettes de serrage qui forment le collet annulaire des languettes de serrage (14) est réalisée pour que la pression exercée par l'écrou chapeau sur les languettes de serrage (14) par l'action du collet sur les languettes de serrage fait qu'au moins l'une des languettes de serrage (21e, 21f, 21g) subit sélectivement un rapprochement plus important vers le câble (22) mis en place, par comparaison avec les autres languettes de serrage restant dans le collet annulaire de manière que, d'une part entre le câble (22) et, d'autre part, les languettes de serrage (14), il s'établisse une forme non circulaire.

2. Accessoire selon la revendication 1, comportant des languettes de serrage, adjacentes à segmentation inclinée, caractérisé en ce que la segmentation inclinée des languettes de serrage (14) juxtaposées, de manière adjacente, est telle que pour au moins une languette de serrage (21e, 21f, 21g) il se forme une configuration plan/surface inclinée, opposée de chaque côté et qui sous l'action de la pression exercée par l'écrou chapeau fait que cette languette de serrage (21e, 21f, 21g) se dégage du collet annulaire formé par les autres languettes de serrage (21a, 21b, 21c, 21d) et est poussée vers le câble mis en place.

3. Accessoire de vissage selon la revendication 1, comportant des fentes radiales ou inclinées séparant des languettes de serrage, accessoire caractérisé en ce qu'au moins l'une des languettes de serrage (14) a une épaisseur radiale plus grande que celle des autres languettes de serrage du collet annulaire de façon qu'au début, lorsque commence à s'exercer la pression de l'écrou chapeau, il se produise tout d'abord un effet de compression dirigé uniquement sur la ou les languettes de serrage radialement (la) (les) épaisse(s), de manière qu'après une coopération de l'ensemble du collet annulaire avec le collet de l'écrou chapeau, soit radialement plus en saillie et forme la configuration non circulaire.

4. Accessoire de vissage selon la revendication 1, comportant des fentes radiales ou inclinées qui séparent les languettes de serrage, accessoire caractérisé en ce qu'à des hauteurs axiales différentes, lorsque l'écrou chapeau (17) est vissé, on a deux zones d'action, à savoir une première zone d'action formée par les languettes de serrage poussées sélectivement vers l'intérieur (21e, 21f, 21g), et, d'autre part, les languettes de serrage qui subsistent dans le collet annulaire (21a, 21b, 21c, 21d) pour s'appliquer sur le câble de façon que les forces de compression totale exercées par les languettes de serrage (14) soient réparties pour la contrainte de traction, l'étanchéité et le blocage en rotation du câble sur une zone axiale de surface correspondant à une pression réduite.

5. Accessoire de vissage selon l'une des revendications 1-4, caractérisé en ce que toutes les languettes de serrage sont formées en une seule pièce sur le manchon intermédiaire cylindrique creux, coaxialement, en formant le collet annulaire.

6. Accessoire de vissage selon la revendication 2, caractérisé en ce que la formation de segment en biais au niveau des languettes de serrage (14) adjacentes consiste à réaliser, après un nombre prédéterminé de fentes dans une direction donnée, des fentes (20e) suivantes dans la direction opposée, avec une inclinaison de même angle de manière que pour chaque languette de serrage sélectif (21e, 21f, 21g) présentant de part et d'autre des fentes de serrage inclinées (20d, 20e) on obtienne une forme de coin qui tend à expulser cette languette par rapport au collet annulaire restant des autres languettes (14) sous l'effet de la pression exercée par l'écrou chapeau.

7. Accessoire de vissage selon la revendication 6, caractérisé en ce que les languettes de serrage, venant sélectivement en saillie vers l'intérieur, sont réparties sur le cercle complet du collet annulaire formé par les languettes de serrage (14) suivant une répartition symétrique régulière.

8. Accessoire de vissage selon la revendication 6, caractérisé en ce qu'uniquement trois languettes de serrage (14) sont réparties régulièrement à la périphérie du collet annulaire et forment ainsi trois languettes de serrage sélectif (21e, 21f, 21g) écartées respectivement de 120°, languettes formées par la segmentation.

9. Accessoire de vissage selon l'une des revendications 1 à 8, caractérisé en ce que toutes les languettes de serrage (14) agissent sur le câble mis en place par l'intermédiaire d'un joint annulaire, interposé, et allongé dans la direction axiale.

10. Accessoire de vissage selon l'une des revendications 1 à 7, caractérisé en ce que les languettes de serrage à action sélective (21e, 21f, 21g) ont des surfaces de pression agissant vers l'intérieur sur le câble, et qui sont situées plus haut ou plus bas que celles des autres languettes de serrage qui restent dans le collet annulaire, pour arriver à une distorsion axiale supplémentaire des zones de compression.

11. Accessoire de vissage selon la revendication 10, caractérisé en ce que les languettes de serrage sélectif, situées dans une position plus haute, passent par-dessus le joint (16) et s'appliquent directement sur le câble (22).

Fig. 1a

Fig. 1b

Fig. 2a

Fig. 2b

Fig. 3

Fig. 4